# EUROPEAN PATENT SPECIFICATION

(11) **EP 3 196 960 B1**
(45) Date of publication and mention of the grant of the patent: **04.07.2018**
(21) Application number: 15843044.7
(22) Date of filing: 11.09.2015
(51) Int. Cl.: H01M 2/16, H01G 9/02, H01G 11/52

(54) **ELECTROCHEMICAL ELEMENT SEPARATOR AND ELECTROCHEMICAL ELEMENT OBTAINED USING SAME**
ELEKTROCHEMISCHER ELEMENTSEPARATOR UND DAMIT HERGESTELLTES ELEKTROCHEMISCHES ELEMENT
SÉPARATEUR D'ÉLÉMENT ÉLECTROCHIMIQUE ET ÉLÉMENT ÉLECTROCHIMIQUE OBTENU EN L'UTILISANT

(30) Priority: 17.09.2014 JP 2014189124; 20.01.2015 JP 2015008522; 27.02.2015 JP 2015038425; 09.03.2015 JP 2015045693; 11.08.2015 JP 2015158617
(43) Date of publication of application: 26.07.2017
(73) Proprietor: Mitsubishi Paper Mills Limited, Tokyo 130-0026 (JP)
(72) Inventor: SATO, Tomohiro, Tokyo 130-0026 (JP); KITO, Masatoshi, Tokyo 130-0026 (JP)
(74) Representative: Stöckeler, Ferdinand
(86) International application number: PCT/JP2015/075915
(87) International publication number: WO 2016/043142

(56) References cited:
- EP-A1- 2 728 645
- JP-A- 2000 003 834
- JP-A- 2012 134 024
- JP-A- 2012 134 024
- JP-A- 2014 038 974
- US-A1- 2013 244 082

## Description

### TECHNICAL FIELD

The present invention relates to a separator for an electrochemical device, and an electrochemical device including the separator.

### BACKGROUND ART

An electrochemical device includes a separator for an electrochemical device mounted therein. The separator for an electrochemical device acts such that a positive electrode and a negative electrode are not directly contacted to each other within the electrochemical device. In brief, the separator for an electrochemical device isolates a positive electrode from a negative electrode so that internal shorts are not caused. For decreasing the internal resistance of the electrochemical device, pores through which ions of an electrolyte can efficiently transmit need to be formed inside the separator for an electrochemical device. Therefore, the separator for an electrochemical device needs to be porous.

A resin porous membrane including polyolefin resin such as polyethylene and polypropylene has been used as a separator for lithium ion secondary batteries which is used in a lithium ion secondary battery that is a kind of electrochemical device. However, when such a resin porous membrane is used as a separator for lithium ion secondary batteries, abnormal heat generation in the battery causes the separator to melt and shrink, thereby losing the function of isolating the positive electrode from the negative electrode. As a result, a problem has been raised in that significant internal shorts occur.

To address such a problem, there has been proposed a separator for lithium ion secondary batteries which includes an inorganic particle layer disposed by coating the nonwoven fabric base material containing a highly heat-resistant fiber with inorganic particles such as alumina, boehmite, magnesium oxide, and magnesium hydroxide (for example, see Patent Literatures 1 to 4). Also, as the highly heat-resistant fiber, polyethylene terephthalate (PET) fiber is used. However, pinholes are likely to be generated in such a separator for lithium ion secondary batteries, when the thickness of the whole separator for lithium ion secondary batteries is thinned by thinning the nonwoven fabric base material and the inorganic particle layer for reducing the internal resistance. Therefore, such a separator has a problem in that internal shorts are likely to occur.

Also, a capacitor, which is another electrochemical device, has large electric capacity and high stability to repeated charge and discharge. Therefore, such a capacitor is now being widely used in applications such as a power supply source used for vehicles and electrical equipment. As a separator for capacitors which is used in a capacitor, there has been used paper that predominantly contains beaten solvent-spun cellulose fiber or beaten regenerated cellulose fiber (for example, see Patent Literatures 5 to 7), or nonwoven fabric that contains synthetic fiber (for example, see Patent Literature 8). Also, there is recently disclosed a separator that contains a nonwoven fabric base material and an inorganic particle (for example, see Patent Literature 9). However, when the separators for capacitors described in Patent Literatures 5 to 9 are thinned in order to reduce the internal resistance, pinholes are likely to be generated. Therefore, such separators have a problem in that internal shorts are likely to occur.

### CITATION LIST

### PATENT LITERATURES

PATENT LITERATURE 1: JP-T-2005-536857
PATENT LITERATURE 2: JP-A-2009-230975
PATENT LITERATURE 3: JP-A-2012-134024
PATENT LITERATURE 4: WO 2013/187458 A
PATENT LITERATURE 5: JP-A-2002-231580
PATENT LITERATURE 6: JP-A-11-168033
PATENT LITERATURE 7: JP-A-2000-3834
PATENT LITERATURE 8: JP-A-2003-45752
PATENT LITERATURE 9: JP-A-2014-38974

### SUMMARY OF THE INVENTION

### PROBLEMS TO BE SOLVED

An object of the present invention is to provide a separator for an electrochemical device which has excellent production stability, reduced pinholes, and low internal resistance, and an electrochemical device including the separator.

### SOLUTION TO THE PROBLEMS

The present inventors found the following invention as a means for solving the above-described problems.
(1) In a separator for an electrochemical device, including a nonwoven fabric base material and an inorganic particle layer that contains inorganic particles, the nonwoven fabric base material predominantly includes a synthetic resin fiber with an average fiber diameter of 1 to 20 µm. The inorganic particle layer includes an inorganic particle layer A that contains magnesium hydroxide with an average particle size of 2.0 to 4.0 µm, and an inorganic particle layer B that contains magnesium hydroxide with an average particle size of not less than 0.5 µm and less than 2.0 µm. The inorganic particle layer A and the inorganic particle layer B are stacked in this order on a surface of the nonwoven fabric base material.
(2) In a separator for an electrochemical device, including a nonwoven fabric base material and an inorganic particle layer that contains inorganic particles, the nonwoven fabric base material predominantly includes a synthetic resin fiber with an average fiber diameter of 1 to 20 µm. The inorganic particle layer includes an inorganic particle layer A that contains magnesium hydroxide with an average particle size of 2.0 to 4.0 µm, and an inorganic particle layer B that contains magnesium hydroxide with an average particle size of not less than 0.5 µm and less than 2.0 µm. The inorganic particle layer A is disposed on a surface of the nonwoven fabric base material, and the inorganic particle layer B is disposed on the other surface of the nonwoven fabric base material.

An electrochemical device including the separator for an electrochemical device according to the description (1) or (2) was found.

### EFFECTS OF THE INVENTION

According to the present invention, the nonwoven fabric base material predominantly containing the synthetic resin fiber with an average fiber diameter of 1 to 20 µm has high strength. Therefore, the nonwoven fabric base material can have strength that is sufficient for coating the nonwoven fabric base material with a coating liquid containing inorganic particles, when disposing an inorganic particle layer that contains magnesium hydroxide as inorganic particles.

The inorganic particle layer A contains, as inorganic particles, magnesium hydroxide with an average particle size of 2.0 to 4.0 µm. The inorganic particle layer B contains, as inorganic particles, magnesium hydroxide with an average particle size of not less than 0.5 µm and less than 2.0 µm. The average particle size of the magnesium hydroxide contained in the inorganic particle layer A is more than the average particle size of the magnesium hydroxide contained in the inorganic particle layer B. Therefore, the inorganic particle layer A is less likely to penetrate into the nonwoven fabric base material compared to the inorganic particle layer B. Therefore, pinholes are unlikely to be generated, but the thickness is likely to become somewhat thick. The inorganic particle layer B is likely to penetrate into the nonwoven fabric base material. Therefore, pinholes are likely to be generated, but the thickness is likely to become thin, compared to the inorganic particle layer A.

Therefore, in the separator for an electrochemical device configured such that the inorganic particle layer A layer and the inorganic particle layer B are stacked in this order on a surface of the nonwoven fabric base material, the inorganic particle layer A blocks the penetration of the inorganic particle layer B into the nonwoven fabric base material. Therefore, a uniform inorganic particle layer can be formed on the surface of the separator for an electrochemical device. As a result, even when the separator for an electrochemical device is thin, the generation of pinholes can be suppressed, and the internal resistance can also be reduced.

In the separator for an electrochemical device that includes the inorganic particle layer A and the inorganic particle layer B disposed on different surfaces of the nonwoven fabric base material, the generation of pinholes can also be suppressed, and the thickness and the internal resistance can be reduced.

Furthermore, since the inorganic particle layer A and the inorganic particle layer B are easily brought into intimate contact with the nonwoven fabric base material, the layer strength increases. Therefore, there can be obtained the effect that defects are unlikely to be caused during the production of a separator and the effect that production stability is excellent.

### DESCRIPTION OF THE EMBODIMENTS

### <Separator for an electrochemical device>

A separator for an electrochemical device (1) according to the present invention is configured such that on a surface of a nonwoven fabric base material that predominantly contains a synthetic resin fiber with an average fiber diameter of 1 to 20 µm, an inorganic particle layer A that contains magnesium hydroxide with an average particle size of 2.0 to 4.0 µm and an inorganic particle layer B that contains magnesium hydroxide with an average particle size of not less than 0.5 µm and less than 2.0 µm are stacked in this order.

A separator for an electrochemical device (2) according to the present invention is configured such that on a surface of a nonwoven fabric base material that predominantly contains a synthetic resin fiber with an average fiber diameter of 1 to 20 µm, an inorganic particle layer A that contains magnesium hydroxide with an average particle size of 2.0 to 4.0 µm is disposed, and on on the other surface of the nonwoven fabric base material, an inorganic particle layer B that contains magnesium hydroxide with an average particle size of not less than 0.5 µm and less than 2.0 µm is disposed.

The nonwoven fabric base material used in the separator for an electrochemical device according to the present invention is a nonwoven fabric base material that predominantly contains a synthetic resin fiber with an average fiber diameter of 1 to 20 µm. The content of the synthetic resin fiber with an average fiber diameter of 1 to 20 µm with respect to the total fiber which constitutes the nonwoven fabric base material is preferably 70% by mass or more, more preferably 80% by mass or more, and further preferably 90% by mass or more. When the content of the synthetic resin fiber with an average fiber diameter of 1 to 20 µm is less than 70% by mass, the strength of the nonwoven fabric base material may decrease.

The synthetic resin fiber with an average fiber diameter of 1 to 20 µm is a fiber which does not have fibrils. This fiber is a so-called staple fiber (short fiber). The average fiber diameter of the synthetic resin fiber with an average fiber diameter of 1 to 20 µm is 1 to 20 µm, more preferably 1 to 15 µm, and further preferably 1 to 10 µm. When the average fiber diameter is less than 1 µm, the fiber is excessively thin so that the inorganic particle layer is unlikely to penetrate into the nonwoven fabric base material. Therefore, it becomes difficult to thin the thickness of the separator. When the average fiber diameter is more than 20 µm, it becomes difficult to thin the thickness of the nonwoven fabric base material itself. Therefore, it becomes difficult to thin the thickness of the separator. The nonwoven fabric base material may contain a synthetic resin fiber with an average fiber diameter of less than 1 µm, a synthetic resin fiber with an average fiber diameter of more than 20 µm, and a fibrillated product, fibrid, or pulped product of synthetic resin and synthetic resin fiber. However, for obtaining the effect of thinning the separator, the nonwoven fabric base material predominantly contains the synthetic resin fiber with an average fiber diameter of 1 to 20 µm.

The average fiber diameter in the present invention is an average value for the fiber diameters of 30 fibers in a scanning electron micrograph of the cross section of the nonwoven fabric base material. The 30 fibers are selected from the fibers which constitute the nonwoven fabric base material and have a cross section vertical to or nearly vertical to the fiber length direction. Synthetic resin fiber may melt or deform by heat or pressure in some cases. In such cases, the cross-sectional area is measured to calculate a fiber diameter converted in terms of a true circle.

The fiber length of the synthetic resin fiber with an average fiber diameter of 1 to 20 µm is preferably 1 to 15 mm, more preferably 2 to 10 mm, and further preferably 2 to 5 mm. When the fiber length is less than 1 mm, the synthetic resin fiber may detach from the nonwoven fabric base material. When the fiber length is more than 15 mm, the fiber tangles into clumps. Therefore, thickness unevenness may be caused.

Examples of the resin which constitutes the synthetic resin fiber may include resins based on polyolefin, polyester, polyvinyl acetate, ethylene-vinyl acetate copolymers, polyamide, acrylic, polyvinyl chloride, polyvinylidene chloride, polyvinyl ether, polyvinylketone, polyether, polyvinyl alcohol, diene, polyurethane, phenol, melamine, furan, urea (urea formaldehyde), aniline, unsaturated polyester, alkyd, fluorine (fluorocarbon), silicone, polyamide imide, polyphenylene sulfide, polyimide, polycarbonate, polyazomethine, polyesteramide, polyetheretherketone, poly-p-phenylenebenzobisoxazole, polybenzimidazole, and ethylene-vinyl alcohol copolymers. Furthermore, derivatives of these resins can be used. Among these resins, polyester-based resin, acrylic-based resin, or polyolefin-based resin is preferably used in order to increase adhesion with the inorganic particle layer. Also, polyester-based resin, acrylic-based resin, or polyamide-based resin is preferably used in order to improve the heat resistance of the separator for an electrochemical device.

Examples of the polyester-based resin may include resin based on polyethylene terephthalate (PET), polybutylene terephthalate (PBT), polytrimethylen terephtalate (PTT), polyethylene naphthalate (PEN), polybutylene naphthalate, polyethylene isophthalate, and fully aromatic polyester. Furthermore, derivatives of these resins can be used. Among these resins, polyethylene terephthalate-based resin is preferable in order to improve heat resistance, liquid electrolyte resistance, and adhesion with the inorganic particle layer.

Examples of the acrylic-based resin may include resin including a polymer of 100% acrylonitrile, and a resin obtained by the copolymerization of acrylonitrile and (meth)acrylic acid derivatives such as acrylic acid, methacrylic acid, acrylic ester (acrylate), and methacrylic ester (acrylate), vinyl acetate or the like.

Examples of the polyolefin-based resin may include polypropylene, polyethylene, polymethylpentene, ethylene-vinyl alcohol copolymers, and olefin-based copolymers. From the viewpoint of heat resistance, examples of the polyolefin-based resin may include polypropylene, polymethylpentene, ethylene-vinyl alcohol copolymers, and olefin-based copolymers.

Examples of the polyamide-based resin may include: aliphatic polyamide such as nylon; wholly aromatic polyamide (aramid) such as poly-paraphenylene terephthalamide, copoly(para-phenylene-3,4'-oxydiphenyleneterephthalic amide), and poly-m-phenyleneisophthalamide; and semi-aromatic polyamide having an aliphatic chain as part of the main chain of wholly aromatic polyamide.

The semi-aromatic refers to aromatic having an aliphatic chain or the like as part of the main chain. The wholly aromatic polyamide may be either of para-type and meth-type.

The synthetic resin fiber may be fiber (single fiber) containing a single resin, or may be fiber (composite fiber) containing two or more resins. Also, the synthetic resin fiber contained in the nonwoven fabric base material may be one synthetic resin fiber or a combination of two or more synthetic resin fibers. Examples of the composite fiber may include core-sheath type, eccentric type, side-by-side type, sea-island type, orange type, and multiple bimetal type. Fiber obtained by dividing the composite fiber may be used.

The nonwoven fabric base material may contain fiber other than the synthetic resin fiber. Examples of such other fiber may contain short fiber or fibrillated products of solvent-spun cellulose or regenerated cellulose, natural cellulose fiber, pulped or fibrillated products of natural cellulose fiber, and inorganic fiber.

The basis weight of the nonwoven fabric base material is preferably 6 to 20 g/m², more preferably 7 to 18 g/m², and further preferably 8 to 15 g/m². When the basis weight is more than 20 g/m², it may be difficult to thin the film of the separator. When the basis weight is less than 6 g/m², it may be difficult to obtain sufficient strength. It is noted that the basis weight is measured by the method defined in JIS P 8124 (Paper and paperboard-measurement method of basis weight).

The thickness of the nonwoven fabric base material is preferably 9 to 30 µm, more preferably 10 to 27 µm, and further preferably 11 to 24 µm. When the thickness is less than 9 µm, the nonwoven fabric base material may not have sufficient strength. When the thickness is more than 30 µm, it may become difficult to thin the film of the separator. It is noted that the thickness means a value measured by the method defined in JIS B 7502, that is, a value measured using an outside micrometer at a load of 5 N.

As a manufacturing method for the nonwoven fabric base material, there can be used a manufacturing method of forming a fiber web, subsequently bonding, fusing, or entangling the fiber in the fiber web to obtain a nonwoven fabric. The obtained nonwoven fabric itself may be used as the nonwoven fabric base material, or a laminate including the plurality of nonwoven fabrics may be used. Examples of a manufacturing method for the fiber web may include a dry laid method such as a carding method, an airlay method, a spunbond method, and a meltblow method, a wet laid method such as a paper-making method, and an electrospinning method. Among these, a web obtained by the wet laid method is uniform and dense, and therefore can be suitably used as the nonwoven fabric base material. The wet laid method refers to a method of obtaining a fiber web from a uniform paper-making slurry obtained by dispersing fiber in water with a paper-making machine having at least one of forming systems such as a cylinder system, a Fourdrinier system, and an inclined system.

The method of manufacturing the nonwoven fabric base material from the fiber web may include, for example, a water-flow interlacing (spun lace) method, a needle punch method, and a binder bonding method (thermal bond). In particular, when the wet laid method is used with the emphasis on uniformity, the binder bonding method is preferably performed for bonding the synthetic resin fiber for binders. The binder bonding method allows a uniform nonwoven fabric to be formed from a uniform web. The wet laid nonwoven fabric manufactured in this manner is preferably subjected to pressure with a calender or the like so that the thickness is adjusted or becomes uniform. However, such pressurization is preferably performed at the temperature that does not cause the synthetic resin fiber for binders to become a film (at the temperature which is 20°C or more lower than the melting point or the softening point of the synthetic resin fiber for binders.

The inorganic particle layer A of the separators for electrochemical devices (1) and (2) according to the present invention is obtained by a method of coating a surface of the nonwoven fabric base material with a coating liquid ***a*** that contains magnesium hydroxide with an average particle size of 2.0 to 4.0 µm.

The average particle size in the present invention is a volume average particle size (D50) calculated from the measurement of a particle size distribution by a laser diffraction method.

The average particle size of the magnesium hydroxide in the inorganic particle layer A is more preferably 2.2 to 3.7 µm, and further preferably 2.5 to 3.5 µm.

The coating amount (absolute dry) of the inorganic particle layer A is preferably 2.0 to 8.0 g/m², more preferably 2.5 to 7.0 g/m², and further preferably 3.0 to 6.0 g/m². When the coating amount is more than 8.0 g/m², the thickness of the separator for an electrochemical device may become excessively thick. When the coating amount is less than 2.0 g/m², pinholes tend to be generated in some cases.

The inorganic particle layer B of the separator for an electrochemical device (1) according to the present invention is obtained by a method of coating the inorganic particle layer A with a coating liquid ***b*** that contains magnesium hydroxide with an average particle size of 0.5 µm or more and 2.0 µm or less.

The inorganic particle layer B of the separator for an electrochemical device (2) according to the present invention is obtained by a method of coating, with the coating liquid b, the other surface of the nonwoven fabric base material, which is opposite the surface on which the inorganic particle layer A is disposed.

The average particle size of the magnesium hydroxide in the inorganic particle layer B is more preferably 0.5 to 1.5 µm, further preferably 0.5 to 1.3 µm, and particularly preferably 0.5 to 1.0 µm.

The coating amount (absolute dry) of the inorganic particle layer B is preferably 2.0 to 8.0 g/m², more preferably 2.5 to 7.0 g/m², and further preferably 3.0 to 6.0 g/m². When the coating amount is more than 8.0 g/m², the thickness of the separator for an electrochemical device may become excessively thick. When the coating amount is less than 2.0 g/m², pinholes tend to be generated in some cases.

A medium for preparing a coating liquid which contains magnesium hydroxide is not particularly limited, as long as it allows a binder and magnesium hydroxide to be uniformly dissolved or dispersed. Examples of the medium to be used may include, as necessary, aromatic hydrocarbons such as toluene, cyclic ethers such as tetrahydrofuran (THF), ketones such as methyl ethyl ketone (MEK), alcohols such as isopropyl alcohol, N-methyl-2-pyrrolidone (N-methylpyrrolidone (NMP)), N,N-dimethylacetamide (DMAc), N,N-dimethylformamide (DMF), dimethyl sulfoxide (DMSO), and water. Also, a mixture of these media may be used as necessary. It is noted that a medium to be used preferably does not cause the nonwoven fabric base material to expand and dissolve.

The method for applying a coating liquid may be selected, as necessary, from various coating processes such as blade, rod, reverse roll, lip, die, curtain, and air knife, various printing processes such as flexography, screen, offset, gravure, and inkjet, transfer processes such as roll transfer and film transfer, and the like.

The basis weight of the separator for an electrochemical device according to the present invention is preferably 10 to 36 g/m², more preferably 12 to 32 g/m², and further preferably 14 to 27 g/m². When the basis weight is more than 36 g/m², the internal resistance may become excessively high. When the basis weight is less than 10 g/m², pinholes tend to be generated in some cases, or sufficient strength may become difficult to obtain.

The thickness of the separator for an electrochemical device according to the present invention is preferably 10 to 40 µm, more preferably 11 to 30 µm, and further preferably 12 to 25 µm. When the thickness is more than 40 µm, the separator for an electrochemical device becomes excessively thick, thereby causing the internal resistance to increase in some cases. When the thickness is less than 10 µm, pinholes tend to be generated in some cases, or sufficient strength may become difficult to obtain.

The separator for an electrochemical device according to the present invention is suitably used particularly in electrochemical devices such as a lithium ion secondary battery and a capacitor.

### <Lithium ion secondary battery>

As a negative electrode active material of the lithium ion secondary battery according to the present invention, there are used a carbon material such as graphite and coke, metal lithium, an alloy of lithium (Li) and one or more (semi)metals selected from aluminum (Al), silicon (Si), tin (Sn), nickel (Ni), and lead (Pb), metal oxides such as SiO, SnO, Fe₂O₃, WO₂, Nb₂O₅, and Li_{4/3}Ti_{5/3}O₄, nitrides such as Li_{0.4}CoN, and the like. As a positive electrode active material, there are used lithium cobalt oxide, lithium manganese oxide, lithium nickel oxide, lithium titanium oxide (LTO), lithium-nickel-manganese oxide, and lithium iron phosphate. Furthermore, the lithium iron phosphate may be a composite containing one or more metals selected from manganese (Mn), chromium (Cr), cobalt (Co), copper (Cu), nickel, vanadium (V), molybdenum (Mo), titanium (Ti), zinc (Zn), aluminum (Al), gallium (Ga), magnesium (Mg), boron (B), and niobium (Nb).

As a liquid electrolyte of the lithium ion secondary battery, there is used a liquid electrolyte obtained by dissolving lithium salt in an organic solvent such as propylene carbonate, ethylene carbonate, dimethyl carbonate, diethyl carbonate, dimethoxyethane, dimethoxymethane, and a mixed solvent thereof. Examples of the lithium salt may include lithium hexafluorophosphate (LiPF₆) and lithium tetrafluoroborate (LiBF₄). As a solid electrolyte, there is used a solid electrolyte obtained by dissolving lithium salt in a gel polymer such as polyethylene glycol and a derivative thereof, a poly(meth)acrylic acid derivative, polysiloxane and a derivative thereof, and polyvinylidene fluoride.

### <Capacitor>

The capacitor in the present invention means an electric double layer capacitor, a lithium ion capacitor, a hybrid capacitor, and a redox capacitor.

In the electric double layer capacitor, an electric double layer is formed at the interface between an electrode and a liquid electrolyte thereby to store electricity. As an electrode active material, there is mainly used a carbon material such as activated carbon, carbon black, carbon aerogel, carbon nanotubes, and non-porous carbon. Examples of a liquid electrolyte may include: an aqueous solution in which ion dissociative salt is dissolved; an organic solvent in which ion dissociative salt is dissolved, such as propylene carbonate, ethylene carbonate, dimethyl carbonate, diethyl carbonate, acetonitrile, γ-butyrolacton, N,N-dimethylformamide, tetrahydrofuran, dimethoxyethane, dimethoxymethane, sulfolane, dimethyl sulfoxide, ethylene glycol, propylene glycol, methyl cellosolve, and a mixed solvent thereof; and ionic liquid (solid molten salt). However, the liquid electrolyte is not limited to these.

The lithium ion capacitor contains as a negative electrode active material a substance which can reversibly support lithium ions. The lithium ion capacitor contains as a positive electrode active material a substance which can reversibly support lithium ions and/or anions. The negative electrode and/or the positive electrode of this capacitor previously support(s) lithium ions. Examples of the negative electrode active material may include graphite, non-graphitizable carbon, polyacene-based organic semiconductors, and lithium titanate oxide. Examples of the positive electrode active material may include conductive macromolecules such as polypyrrole, polythiophene, polyaniline, and polyacetylene, activated carbon, and polyacene-based organic semiconductors. As a liquid electrolyte, there is used an organic solvent in which lithium salt is dissolved. Examples of the lithium salt may include LiClO₄, LiAsF₆, LiBF₄, LiPF₆, and Li(C₂F₅SO₂)N. Examples of the organic solvent may include propylene carbonate, ethylene carbonate, dimethyl carbonate, diethyl carbonate, acetonitrile, γ-butyrolactone, N,N-dimethylformamide, tetrahydrofuran, dimethoxyethane, dimethoxymethane, sulfolane, dimethyl sulfoxide, ethylene glycol, propylene glycol, methyl cellosolve, and a mixed solvent thereof.

The hybrid capacitor is a capacitor in which a positive electrode and a negative electrode have different reaction mechanisms and electrode materials. For example, an oxidation-reduction reaction proceeds in a negative electrode, and an electric double layer-type reaction proceeds in a positive electrode. Examples of a negative electrode active material of the hybrid capacitor may include activated carbon, graphite, hard carbon, polyacene, metal oxide such as Li₄Ti₅O₁₂, and n-type conductive macromolecules. Examples of a positive electrode active material may include activated carbon, metal oxide such as MnO₂, LiCoO₂, and ruthenium oxide, graphite, and p-type conductive macromolecules.

In the redox capacitor, all or part of the oxidation and reduction of the electrode active material, the adsorption and desorption of ions on the electrode surface, and the charge and discharge in the electric double layer is used as a mechanism for storing and discharging electricity. Examples of an electrode active material of the redox capacitor may include metal oxide such as ruthenium oxide, iridium oxide, titanium oxide, zirconium oxide, nickel oxide, vanadium oxide, tungsten oxide, manganese oxide, and cobalt oxide, a composite of the metal oxide, a hydrate of the metal oxide, a composite of the metal oxide and a carbon material, molybdenum nitride, a composite of molybdenum nitride and metal oxide, graphite capable of intercalating lithium ions, lithium metal oxide such as Li₄Ti₅O₁₂ and LiFePO₄, polypyrrole, polyaniline, polythiophene, polyacene, and a derivative thereof, polyfluorene derivatives, polyquinoxaline derivatives, polyindole, cyclic indole polymers, 1,5-diaminoanthraquinone, 1,4-benzoquinone, a composite of these quinone-based compounds and graphite, and metal complex macromolecules. Examples of a liquid electrolyte may include: an aqueous solution in which ion dissociative salt is dissolved; an organic solvent in which ion dissociative salt is dissolved, such as propylene carbonate, ethylene carbonate, dimethyl carbonate, diethyl carbonate, acetonitrile, γ-butyrolacton, N,N-dimethylformamide, tetrahydrofuran, dimethoxyethane, dimethoxymethane, sulfolane, dimethyl sulfoxide, ethylene glycol, propylene glycol, methyl cellosolve, and a mixed solvent thereof; and ionic liquid (solid molten salt). However, the liquid electrolyte is not limited to these.

### EXAMPLES

Hereinafter, the present invention will be described in further detail by way of examples. However, the present invention is not limited to the examples.

Paper-making slurries were prepared in accordance with the raw materials and the formulation amounts shown in Table 1.

### <Description of abbreviations in Table 1>

PET 1: oriented crystallized polyethylene terephthalate fiber with an average fiber diameter of 2.5 µm and a fiber length of 3 mm
PET 2: oriented crystallized polyethylene terephthalate fiber with an average fiber diameter of 3.2 µm and a fiber length of 3 mm
PET 3: single component-type undrawn polyethylene terephthalate fiber with an average fiber diameter of 4.3 µm and a fiber length of 3 mm (binder, softening point: 120°C, melting point: 230°C)
PA 1: wholly aromatic polyamide fiber with an average fiber diameter of 8.1 µm and a fiber length of 5 mm (copoly(p-phenylene-3,4'-oxydiphenylene terephthalamide))

**[Table 1]**

| Paper-making slurry | Fiber formulation ratio (% by mass) |
|---|---|
| 1 | PET 1/PET 3 = 70/30 |
| 2 | PET 2/PET 3 = 60/40 |
| 3 | PET 2/PET 3/PA 1 = 40/30/30 |

### <Nonwoven fabric base materials 1 to 5>

Nonwoven fabric base materials 1 to 5 shown in Table 2 were produced from slurries 1 to 3 by a paper-making method, using a cylinder and inclined combination paper machine. The thickness was adjusted by performing a heat calender treatment under the conditions of metal roll temperature: 195°C, linear pressure: 200 kN/m, processing speed: 10 m/min, and 1 nip, using a heat calender apparatus having a configuration in which a metal roll and a resin roll are included (Shore hardness: D92).

**[Table 2]**

| | Paper-making slurry | Average fiber diameter (µm) | Basis weight (g/m²) | Thickness (µm) | Density (g/cm³) |
|---|---|---|---|---|---|
| Nonwoven fabric | 1 | 3.0 | 8.0 | 12 | 0.67 |
| base material 1 | | | | | |
| Nonwoven fabric base material 2 | 2 | 3.6 | 10.0 | 15 | 0.67 |
| Nonwoven fabric base material 3 | 3 | 5.0 | 15.0 | 24 | 0.63 |
| Nonwoven fabric base material 4 | 1 | 3.0 | 6.0 | 9 | 0.67 |
| Nonwoven fabric base material 5 | 1 | 3.0 | 20.0 | 30 | 0.67 |

### <Preparation of coating liquid a1>

In 150 parts by mass of water, 100 parts by mass of magnesium hydroxide with an average particle size of 2.0 µm were dispersed. Next, 75 parts by mass of a 2% by mass aqueous solution of sodium carboxymethyl cellulose salt were added. Then, the product was mixed by stirring. Here, the viscosity at 25°C of a 1% by mass aqueous solution of this sodium carboxymethyl cellulose salt is 200 mPa·s. Subsequently, 10 parts by mass of an emulsion (solid content concentration: 50% by mass) containing a carboxy-modified styrene-butadiene copolymer resin with a glass transition point of -18°C and an average particle size of 0.2 µm were added. Then, the product was mixed by stirring. Lastly, an adjustment water was added until the solid content concentration reached 25% by mass. Thus, a coating liquid a1 was prepared.

### <Preparation of coating liquid a2>

A coating liquid a2 was prepared in a same manner as the preparation of the coating liquid al, except that the magnesium hydroxide with an average particle size of 2.0 µm was changed to magnesium hydroxide with an average particle size of 3.0 µm.

### <Preparation of coating liquid a3>

A coating liquid a3 was prepared in a same manner as the preparation of the coating liquid a1, except that the magnesium hydroxide with an average particle size of 2.0 µm was changed to magnesium hydroxide with an average particle size of 4.0 µm.

### <Preparation of coating liquid b1>

In 150 parts by mass of water, 100 parts by mass of magnesium hydroxide with an average particle size of 0.5 µm were dispersed. Next, 75 parts by mass of a 2% by mass aqueous solution of sodium carboxymethyl cellulose salt were added. Then, the product was mixed by stirring. Here, the viscosity at 25°C of a 1% by mass aqueous solution of this sodium carboxymethyl cellulose salt is 200 mPa·s. Subsequently, 10 parts by mass of an emulsion (solid content concentration: 50% by mass) containing a carboxy-modified styrene-butadiene copolymer resin with a glass transition point of -18°C and an average particle size of 0.2 µm were added. Then, the product was mixed by stirring. Lastly, an adjustment water was added until the solid content concentration reached 25% by mass. Thus, a coating liquid a1 was prepared.

### <Preparation of coating liquid b2>

A coating liquid b2 was prepared in a same manner as the preparation of the coating liquid b1, except that the magnesium hydroxide with an average particle size of 0.5 µm was changed to magnesium hydroxide with an average particle size of 1.0 µm.

### <Preparation of coating liquid b3>

A coating liquid b3 was prepared in a same manner as the preparation of the coating liquid b1, except that the magnesium hydroxide with an average particle size of 0.5 µm was changed to magnesium hydroxide with an average particle size of 1.5 µm.

### <Preparation of coating liquid c1>

In 150 parts by mass of water, 100 parts by mass of alumina hydrate with an average particle size of 2.0 µm were dispersed. Next, 75 parts by mass of a 2% by mass aqueous solution of sodium carboxymethyl cellulose salt were added. Then, the product was mixed by stirring. Here, the viscosity at 25°C of a 1% by mass aqueous solution of this sodium carboxymethyl cellulose salt is 200 mPa·s. Subsequently, 10 parts by mass of an emulsion (solid content concentration: 50% by mass) containing a carboxy-modified styrene-butadiene copolymer resin with a glass transition point of -18°C and an average particle size of 0.2 µm were added. Then, the product was mixed by stirring. Lastly, an adjustment water was added until the solid content concentration reached 25% by mass. Thus, a coating liquid a1 was prepared.

### <Preparation of coating liquid c2>

A coating liquid c2 was prepared in a same manner as the preparation of the coating liquid c1, except that the alumina hydrate with an average particle size of 2.0 µm was changed to alumina hydrate with an average particle size of 0.5 µm.

### <Separator for an electrochemical device>

### (Example 1-1)

The coating liquid a1 was applied on the nonwoven fabric base material 1 using a kiss reverse-type gravure coater such that the coating amount (absolute dry) became 7.0 g/m², and the applied coating liquid a1 was dried. Thereafter, the coating liquid b1 was further applied on the same coating surface using a kiss reverse-type gravure coater such that the coating amount (absolute dry) became 2.5 g/m², and the applied coating liquid b1 was dried. In this manner, a separator for an electrochemical device was obtained.

### (Example 1-2)

The coating liquid a2 was applied on the nonwoven fabric base material 2 using a kiss reverse-type gravure coater such that the coating amount (absolute dry) became 5.0 g/m², and the applied coating liquid a2 was dried. Thereafter, the coating liquid b2 was further applied on the same coating surface using a kiss reverse-type gravure coater such that the coating amount (absolute dry) became 5.0 g/m², and the applied coating liquid b2 was dried. In this manner, a separator for an electrochemical device was obtained.

### (Example 1-3)

The coating liquid a3 was applied on the nonwoven fabric base material 3 using a kiss reverse-type gravure coater such that the coating amount (absolute dry) became 3.0 g/m², and the applied coating liquid a3 was dried. Thereafter, the coating liquid b3 was further applied on the same coating surface using a kiss reverse-type gravure coater such that the coating amount (absolute dry) became 6.0 g/m², and the applied coating liquid b3 was dried. In this manner, a separator for an electrochemical device was obtained.

### (Example 1-4)

The coating liquid a1 was applied on the nonwoven fabric base material 4 using a kiss reverse-type gravure coater such that the coating amount (absolute dry) became 2.0 g/m², and the applied coating liquid a1 was dried. Thereafter, the coating liquid b1 was further applied on the same coating surface using a kiss reverse-type gravure coater such that the coating amount (absolute dry) became 2.0 g/m², and the applied coating liquid b1 was dried. In this manner, a separator for an electrochemical device was obtained.

### (Example 1-5)

The coating liquid a1 was applied on the nonwoven fabric base material 5 using a kiss reverse-type gravure coater such that the coating amount (absolute dry) became 8.0 g/m², and the applied coating liquid a1 was dried. Thereafter, the coating liquid b1 was further applied on the same coating surface using a kiss reverse-type gravure coater such that the coating amount (absolute dry) became 8.0 g/m², and the applied coating liquid b1 was dried. In this manner, a separator for an electrochemical device was obtained.

### (Example 2-1)

The coating liquid a1 was applied on the nonwoven fabric base material 1 using a kiss reverse-type gravure coater such that the coating amount (absolute dry) became 7.0 g/m², and the applied coating liquid a1 was dried. Thereafter, the coating liquid b1 was applied on the other surface of the nonwoven fabric base material 1 using a kiss reverse-type gravure coater such that the coating amount (absolute dry) became 2.5 g/m², and the applied coating liquid b1 was dried. In this manner, a separator for an electrochemical device was obtained.

### (Example 2-2)

The coating liquid a2 was applied on the nonwoven fabric base material 2 using a kiss reverse-type gravure coater such that the coating amount (absolute dry) became 5.0 g/m², and the applied coating liquid a2 was dried. Thereafter, the coating liquid b2 was further applied on the other surface of the nonwoven fabric base material 2 using a kiss reverse-type gravure coater such that the coating amount (absolute dry) became 5.0 g/m², and the applied coating liquid b2 was dried. In this manner, a separator for an electrochemical device was obtained.

### (Example 2-3)

The coating liquid a3 was applied on the nonwoven fabric base material 3 using a kiss reverse-type gravure coater such that the coating amount (absolute dry) became 3.0 g/m², and the applied coating liquid a3 was dried. Thereafter, the coating liquid b3 was further applied on the other surface of the nonwoven fabric base material 3 using a kiss reverse-type gravure coater such that the coating amount (absolute dry) became 7.0 g/m², and the applied coating liquid b3 was dried. In this manner, a separator for an electrochemical device was obtained.

### (Example 2-4)

The coating liquid a1 was applied on the nonwoven fabric base material 4 using a kiss reverse-type gravure coater such that the coating amount (absolute dry) became 2.0 g/m², and the applied coating liquid a1 was dried. Thereafter, the coating liquid b1 was further applied on the other surface of the nonwoven fabric base material 4 using a kiss reverse-type gravure coater such that the coating amount (absolute dry) became 2.0 g/m², and the applied coating liquid b1 was dried. In this manner, a separator for an electrochemical device was obtained.

### (Example 2-5)

The coating liquid a1 was applied on the nonwoven fabric base material 5 using a kiss reverse-type gravure coater such that the coating amount (absolute dry) became 8.0 g/m², and the applied coating liquid a1 was dried. Thereafter, the coating liquid b2 was further applied on the other surface of the nonwoven fabric base material 5 using a kiss reverse-type gravure coater such that the coating amount (absolute dry) became 8.0 g/m², and the applied coating liquid b2 was dried. In this manner, a separator for an electrochemical device was obtained.

### (Example 2-6)

The coating liquid b1 was applied on the nonwoven fabric base material 2 using a kiss reverse-type gravure coater such that the coating amount (absolute dry) became 3 g/m², and the applied coating liquid b1 was dried. Thereafter, the coating liquid a2 was further applied on the other surface of the nonwoven fabric base material 2 using a kiss reverse-type gravure coater such that the coating amount (absolute dry) became 4 g/m², and the applied coating liquid a2 was dried. In this manner, a separator for an electrochemical device was obtained.

### (Comparative example 1-1)

The coating liquid a2 was applied on the nonwoven fabric base material 2 using a kiss reverse-type gravure coater such that the coating amount (absolute dry) became 5.0 g/m², and the applied coating liquid a2 was dried. Thereafter, the coating liquid a2 was further applied on the same coating surface using a kiss reverse-type gravure coater such that the coating amount (absolute dry) became 5.0 g/m², and the applied coating liquid a2 was dried. In this manner, a separator for an electrochemical device was obtained.

### (Comparative example 1-2)

The coating liquid a2 was applied on the nonwoven fabric base material 2 using a kiss reverse-type gravure coater such that the coating amount (absolute dry) became 10.0 g/m², and the applied coating liquid a2 was dried. Thereafter, the coating liquid a2 was further applied on the same coating surface using a kiss reverse-type gravure coater such that the coating amount (absolute dry) became 10.0 g/m², and the applied coating liquid a2 was dried. In this manner, a separator for an electrochemical device was obtained.

### (Comparative example 1-3)

The coating liquid b2 was applied on the nonwoven fabric base material 2 using a kiss reverse-type gravure coater such that the coating amount (absolute dry) became 5.0 g/m², and the applied coating liquid b2 was dried. Thereafter, the coating liquid b2 was further applied on the same coating surface using a kiss reverse-type gravure coater such that the coating amount (absolute dry) became 5.0 g/m², and the applied coating liquid b2 was dried. In this manner, a separator for an electrochemical device was obtained.

### (Comparative example 1-4)

The coating liquid b2 was applied on the nonwoven fabric base material 2 using a kiss reverse-type gravure coater such that the coating amount (absolute dry) became 5.0 g/m², and the applied coating liquid b2 was dried. Thereafter, the coating liquid a2 was further applied on the same coating surface using a kiss reverse-type gravure coater such that the coating amount (absolute dry) became 5.0 g/m², and the applied coating liquid a2 was dried. In this manner, a separator for an electrochemical device was obtained.

### (Comparative example 1-5)

The coating liquid c1 was applied on the nonwoven fabric base material 2 using a kiss reverse-type gravure coater such that the coating amount (absolute dry) became 8.0 g/m², and the applied coating liquid c1 was dried. Thereafter, the coating liquid c2 was further applied on the same coating surface using a kiss reverse-type gravure coater such that the coating amount (absolute dry) became 8.0 g/m², and the applied coating liquid c2 was dried. In this manner, a separator for an electrochemical device was obtained. It is noted that the inorganic particle layer obtained by applying the coating liquid c1 is referred to as an "inorganic particle layer C", and the inorganic particle layer obtained by applying the coating liquid c2 is referred to as an "inorganic particle layer D".

### (Comparative example 2-1)

The coating liquid a2 was applied on the nonwoven fabric base material 2 using a kiss reverse-type gravure coater such that the coating amount (absolute dry) became 10.0 g/m², and the applied coating liquid a2 was dried. Thereafter, the coating liquid a2 was further applied on the other surface of the nonwoven fabric base material 2 using a kiss reverse-type gravure coater such that the coating amount (absolute dry) became 10.0 g/m², and the applied coating liquid a2 was dried. In this manner, a separator for an electrochemical device was obtained.

### (Comparative example 2-2)

The coating liquid b1 was applied on the nonwoven fabric base material 2 using a kiss reverse-type gravure coater such that the coating amount (absolute dry) became 5.0 g/m², and the applied coating liquid b1 was dried. Thereafter, the coating liquid b1 was further applied on the other surface of the nonwoven fabric base material 2 using a kiss reverse-type gravure coater such that the coating amount (absolute dry) became 5.0 g/m², and the applied coating liquid b1 was dried. In this manner, a separator for an electrochemical device was obtained.

### (Comparative example 2-3)

The coating liquid c1 was applied on the nonwoven fabric base material 2 using a kiss reverse-type gravure coater such that the coating amount (absolute dry) became 8.0 g/m², and the applied coating liquid c1 was dried. Thereafter, the coating liquid c2 was further applied on the other surface of the nonwoven fabric base material 2 using a kiss reverse-type gravure coater such that the coating amount (absolute dry) became 8.0 g/m², and the applied coating liquid c2 was dried. In this manner, a separator for an electrochemical device was obtained.

### (Comparative example 3-1)

A solvent-spun cellulose fiber with an average fiber diameter of 10.0 µm and a fiber length of 4 mm was beaten using a refiner until the Canadian Standard Freeness (CSF) measured in accordance with JIS P8121 became 20 ml, thereby to obtain a fiber C1. Also, Manila hemp was beaten using a refiner until the CSF became 300 ml, thereby to obtain a fiber C2. A paper-making slurry containing the fibers C1 and C2 at a ratio of C1/C2 = 70/30 was prepared. From the obtained paper-making slurry, there was prepared a separator for an electrochemical device which has a basis weight of 7.0 g/m², a thickness of 20 µm, and a density of 0.35 g/cm³, by a paper-making method, using a cylinder and inclined combination paper machine.

The separators for electrochemical devices according to the examples and comparative examples and the electrochemical devices including the separators were evaluated as below. The result is shown in Table 3.

### [Pinhole evaluation]

The state of the pinholes of each of the above-described separators for electrochemical devices (A4 size: 210 mm × 297 mm) was visually inspected with transmitted light. The observed pinholes were evaluated according to the following evaluation criteria. The result is shown in Table 3.

A: Generation of pinholes is not visually observed.
B: A portion where transmitted light is slightly observed exists.
C: Multiple transmitted lights are apparently observed.

### [Layer strength evaluation]

A portion with a size of 100 mm in a width direction × 200 mm in a length direction was cut out from each of the above-described separators for electrochemical devices. The cut-out portion of the separator was bent 180 degrees along a crease which has been formed at the position of 100 mm in the length direction, and thereafter opened to be restored. This operation was repeated three times. The state of cracks on the inorganic particle layer at that time was visually inspected. The observed cracks were evaluated according to the following evaluation criteria. It is noted that when a single surface was coated, the portion of the separator was bent such that the nonwoven fabric base material surface comes to be the inside and the inorganic particle layer surface comes to be the outside. When both surfaces were coated, the portion of the separator was bent such that the inorganic particle layer A or C comes to be the inside and the inorganic particle layer B or D comes to be the outside. The result is shown in Table 3.

A: Damages are not observed in the cease portion of the inorganic particle layer.
C: Many cracks are observed in the cease portion of the inorganic particle layer.

### <Lithium ion secondary battery>

### [Preparation of lithium ion secondary battery]

A lithium ion secondary battery was prepared with each of the above-described separators for electrochemical devices, lithium manganese oxide as a positive electrode, mesocarbon microbeads as a negative electrode, and as a liquid electrolyte, a mixed solvent solution containing 1 mol/L of lithium hexafluorophosphate (LiPF₆), and diethyl carbonate (DEC) and ethylene carbonate (EC) at a volume ratio of 7/3. The design capacity of the prepared secondary battery was 30 mAh.

### [Evaluation of internal resistance]

Each of the prepared lithium ion secondary batteries was subjected to conditioning charge and discharge five cycles with a sequence of "60 mA constant current charge → 4.2 V constant voltage charge (1 hour) → constant current discharge at 60 mA until 2.8 V → next cycle". Thereafter, an operation of "60 mA constant current charge → 4.2 V constant voltage charge (1 hour) → constant current discharge (discharge amount: 3 mAh) at 6 mA for 30 minutes → measurement of voltage (voltage ***a***) immediately before the termination of discharge → 60 mA constant current charge → 4.2 V constant voltage charge (1 hour) → constant current discharge (discharge amount: 3 mAh) at 90 mA for 2 minutes → measurement of voltage (voltage ***b***) immediately before the termination of discharge" was performed. The internal resistance was calculated according to the formula "internal resistance Ω = (voltage a - voltage b)/(90 mA - 6 mA)". The result is shown in Table 3.

A: Internal resistance of less than 4 Ω.
B: Internal resistance of not less than 4 Ω and less than 5 Ω
C: Internal resistance of 5 Ω or more

### <Electric double layer capacitor>

### [Preparation of electrode 0]

Ten parts by mass of polyvinylidene fluoride was dissolved in 90 parts by mass of N-methyl-2-pyrrolidione. Into the resultant solution, there were added 80 parts by mass of powdered activated carbon having an average particle size of 5.0 µm and a specific surface area of 2000 m²/g obtained from phenolic resin as a starting material, 10 parts by mass of acetylene black having an average particle size of 200 nm, and 300 parts by mass of N-methyl-2-pyrrolidone. Then, the mixture was sufficiently mixed using a mixing stirrer thereby to obtain an electrode slurry. An aluminum foil current collector having a thickness of 30 µm and a surface which has been subjected to etching with hydrochloric acid was coated with the above-described electrode slurry using an applicator. Then, the coat was dried. Thereafter, pressing was performed using a roll press apparatus. Thus, an electrode for electric double layer capacitors which has a thickness of 150 µm was produced as an electrode 0.

### [Preparation of electric double layer capacitor]

Two electrodes each having a size of 30 mm × 50 mm were cut out from the electrode 0. The two electrodes were stacked such that each of the above-described separators for electrochemical devices lay between these electrodes. The stacked electrodes were stored in an aluminum storage bag, and subsequently heated under vacuum at 130°C for 24 hours. Thereafter, a liquid electrolyte was infused into the aluminum storage bag, and the inlet of the bag was sealed. Thus, an electric double layer capacitor was produced. As the liquid electrolyte, a propylene carbonate solution containing 1.5 mol/l of (C₂H₅)₃(CH₃)NBF₄ was used.

### [Evaluation of internal resistance]

Each of the produced electric double layer capacitors was subjected to constant current charge 10 cycles with a charge and discharge voltage range of 0 to 2.7 V and a charge and discharge current of 200 mA The internal resistance was calculated from a voltage decrease immediately after the start of discharge in the tenth cycle. An average value for ten calculated internal resistance values was obtained. The result is shown in Table 3.

A: Internal resistance of less than 80 mΩ
B: Internal resistance of not less than 80 mΩ and less than 100 mΩ
C: Internal resistance of 100 mΩ or more

**[Table 3]**

| | Nonwoven fabric base material | Configuration | Coating liquid | | Basis weight (g/m²) | Thickness (µm) | Pinhole evaluation | Layer strength | Internal resistance evaluation | |
|---|---|---|---|---|---|---|---|---|---|---|
| | | A: Inorganic particle layer A | | | | | | | | |
| | | | Inorganic particle layer A C | Inorganic particle layer B D | | | | | Lithium ion secondary battery | Capacitor |
| | | B: Inorganic particle layer B | | | | | | | | |
| | | C: Inorganic particle layer C | | | | | | | | |
| | | D: Inorganic particle layer D | | | | | | | | |
| | | N: Nonwoven fabric base material | | | | | | | | |
| Example 1-1 | 1 | N/A/B | a1 | b1 | 17.5 | 19 | A | A | A | A |
| Example 1-2 | 2 | N/A/B | a2 | b2 | 20.0 | 23 | A | A | A | A |
| Example 1-3 | 3 | N/A/B | a3 | b3 | 24.0 | 30 | A | A | A | A |
| Example 1-4 | 4 | N/A/B | a1 | b1 | 10.0 | 10 | B | A | A | A |
| Example 1-5 | 5 | N/A/B | a1 | b1 | 36.0 | 40 | A | A | B | B |
| Example 2-1 | 1 | A/N/B | a1 | b1 | 17.5 | 18 | A | A | A | A |
| Example 2-2 | 2 | A/N/B | a2 | b2 | 20.0 | 22 | A | A | A | A |
| Example 2-3 | 3 | A/N/B | a3 | b3 | 25.0 | 30 | A | A | A | A |
| Example 2-4 | 4 | A/N/B | a1 | b1 | 10.0 | 10 | B | A | A | A |
| Example 2-5 | 5 | A/N/B | a1 | b2 | 36.0 | 40 | A | A | B | B |
| Example 2-6 | 2 | A/N/B | a2 | b1 | 17.0 | 20 | A | A | A | A |
| Comparative example 1-1 | 2 | N/A/A | a2 | - | 20.0 | 24 | C | A | A | A |
| Comparative example 1-2 | 2 | N/A/A | a2 | - | 30.0 | 33 | A | A | C | C |
| Comparative example 1-3 | 2 | N/B/B | - | b2 | 20.0 | 22 | C | A | A | A |
| Comparative example 1-4 | 2 | N/B/A | a2 | b2 | 20.0 | 23 | C | A | A | A |
| Comparative example 1-5 | 2 | N/C/D | c1 | c2 | 26.0 | 28 | A | C | A | A |
| Comparative example 2-1 | 2 | A/N/A | a2 | - | 30.0 | 33 | A | A | C | C |
| Comparative example 2-2 | 2 | B/N/B | - | b1 | 20.0 | 20 | C | A | A | A |
| Comparative example 2-3 | 2 | C/N/D | c1 | c2 | 26.0 | 28 | A | C | A | A |
| Comparative example 3-1 | - | - | - | - | 7.0 | 20 | C | - | A | A |

As shown in Table 3, each of the separators for electrochemical devices produced in Examples 1-1 to 1-5 is configured such that on a surface of the nonwoven fabric base material that predominantly contains the synthetic resin fiber with an average fiber diameter of 1 to 20 µm, the inorganic particle layer A and the inorganic particle layer B are stacked in this order. Therefore, the number of pinholes of the separator for an electrochemical device is small. Also, the internal resistances of the lithium ion secondary battery and the capacitor each including the separator for an electrochemical device were low and excellent. Furthermore, since the layer strength is high, defects are unlikely to be caused during the production of the separator. Therefore, this separator was excellent in production stability.

Also, each of the separators for electrochemical devices produced in Examples 2-1 to 2-6 is configured such that the inorganic particle layer A disposed on a surface of the nonwoven fabric base material that predominantly contains the synthetic resin fiber with an average fiber diameter of 1 to 20 µm, and the inorganic particle layer B is disposed on the other surface of the nonwoven fabric base material. Therefore, the number of pinholes of the separator for an electrochemical device is small. Also, the internal resistances of the lithium ion secondary battery and the capacitor each including the separator for an electrochemical device were low and excellent. Furthermore, since the layer strength is high, defects are unlikely to be caused during the production of the separator. Therefore, this separator was excellent in production stability.

On the other hand, the separator for an electrochemical device produced in Comparative example 1-1 does not include the inorganic particle layer B. Therefore, generation of pinholes was observed.

The separator for an electrochemical device produced in Comparative example 1-2 does not include the inorganic particle layer B. Also, the amount of the applied inorganic particle layer A of this separator was further larger than that of the separator for an electrochemical device produced in Comparative example 1-1. Although generation of pinholes was suppressed, the excessive increase in thickness of the inorganic particle layer caused the lithium ion secondary battery and the capacitor to have deteriorated internal resistance.

The separator for an electrochemical device produced in Comparative example 1-3 does not include the inorganic particle layer A. Since the inorganic particle layer B penetrates into the nonwoven fabric base material, a uniform inorganic particle layer was not formed on the separator surface. Therefore, generation of pinholes was observed.

The separator for an electrochemical device produced in Comparative example 1-4 is configured such that on a surface of the nonwoven fabric base material, the inorganic particle layer B and the inorganic particle layer A are stacked in this order. Since the inorganic particle layer B penetrates into the nonwoven fabric base material, a uniform inorganic particle layer was not formed on the separator surface. Therefore, generation of pinholes was observed.

The separator for an electrochemical device produced in Comparative example 1-5 is configured such that on a surface of the nonwoven fabric base material, the inorganic particle layer C containing alumina hydrate with an average particle size of 2.0 µm and the inorganic particle layer D containing alumina hydrate with an average particle size of 0.5 µm are stacked in this order. This separator had layer strength which was lower than those of the separators for electrochemical devices produced in Examples 1-1 to 1-5, and was inferior in separator production stability.

The separator for an electrochemical device produced in Comparative example 2-1 includes the inorganic particle layer A disposed on both surfaces of the nonwoven fabric base material. However, the inorganic particle layer B layer is not included. Therefore, the separator for an electrochemical device becomes excessively thick. Thus, the lithium ion secondary battery and the capacitor had deteriorated internal resistance.

The separator for an electrochemical device produced in Comparative example 2-2 includes the inorganic particle layer B layer disposed on both surfaces of the nonwoven fabric base material. However, the inorganic particle layer A is not included. Therefore, the inorganic particle layer B is likely to penetrate into the nonwoven fabric base material. Thus, generation of pinholes was observed.

The separator for an electrochemical device produced in Comparative example 2-3 is configured such that the inorganic particle layer C containing alumina hydrate with an average particle size of 2.0 µm is disposed on a surface of the nonwoven fabric base material, and the inorganic particle layer D containing alumina hydrate with an average particle size of 0.5 µm is disposed on the other surface of the nonwoven fabric base material. This separator had layer strength which was lower than those of the separators for electrochemical devices produced in Examples 2-1 to 2-6, and was inferior in separator production stability.

The separator for an electrochemical device produced in Comparative example 3-1 is a paper separator that includes a solvent-spun cellulose fiber C1 and a Manila hemp fiber C2. The thickness of the separator was as thin as 20 µm. Therefore, generation of pinholes was observed.

In comparisons among the separators for electrochemical devices produced in Examples 1-1 to 1-4, the separator for an electrochemical device produced in Example 4 is somewhat low in basis weight and somewhat thin in thickness. Accordingly, a portion where transmitted light is slightly observed existed in the pinhole evaluation, compared to the separators produced in Examples 1-1 to 1-3 and 1-5.

The separator for an electrochemical device produced in Example 5 is somewhat high in basis weight and somewhat thick in thickness. Accordingly, the lithium ion secondary battery and the capacitor had somewhat higher internal resistance, compared to the separators for electrochemical devices produced in Example 1-1 to 1-4.

In comparisons among the separators for electrochemical devices produced in Examples 2-1 to 2-6, the separator for an electrochemical device produced in Example 2-4 is somewhat low in basis weight and somewhat thin in thickness. Accordingly, a portion where transmitted light is slightly observed existed in the pinhole evaluation, compared to the separators produced in Examples 2-1 to 2-3, 2-5, and 2-6.

The separator for an electrochemical device produced in Example 2-5 is somewhat high in basis weight and somewhat thick in thickness. Accordingly, the lithium ion secondary battery and the capacitor had somewhat higher internal resistance, compared to the separators for electrochemical devices produced in Examples 2-1 to 2-4 and 2-6.

The inorganic particle layer B layer of the separator for an electrochemical device produced in Example 2-6 was first applied on the nonwoven fabric base material. Pinholes were not observed, in a similar manner to the separators for electrochemical devices according to Examples 2-1 to 2-5 in which the inorganic particle layer A was first applied on the nonwoven fabric base material. The internal resistances of the lithium ion secondary battery and the capacitor were low and excellent.

### INDUSTRIAL APPLICABILITY

The present invention can be suitably used in, for example, a separator for an electrochemical device and an electrochemical device.

## Claims

1. A separator for an electrochemical device, comprising a nonwoven fabric base material and an inorganic particle layer that contains inorganic particles, wherein
the nonwoven fabric base material predominantly includes a synthetic resin fiber with an average fiber diameter of 1 to 20 µm,
the inorganic particle layer includes an inorganic particle layer A that contains magnesium hydroxide with an average particle size of 2.0 to 4.0 µm, and an inorganic particle layer B that contains magnesium hydroxide with an average particle size of not less than 0.5 µm and less than 2.0 µm, and
the inorganic particle layer A and the inorganic particle layer B are stacked in this order on a surface of the nonwoven fabric base material.

2. A separator for an electrochemical device, comprising a nonwoven fabric base material and an inorganic particle layer that contains inorganic particles, wherein
the nonwoven fabric base material predominantly includes a synthetic resin fiber with an average fiber diameter of 1 to 20 µm,
the inorganic particle layer includes an inorganic particle layer A that contains magnesium hydroxide with an average particle size of 2.0 to 4.0 µm, and an inorganic particle layer B that contains magnesium hydroxide with an average particle size of not less than 0.5 µm and less than 2.0 µm, and
the inorganic particle layer A is disposed on a surface of the nonwoven fabric base material, and the inorganic particle layer B is disposed on the other surface of the nonwoven fabric base material.

3. An electrochemical device comprising the separator for an electrochemical device according to claim 1 or 2.

## Patentansprüche

1. Ein Separator für eine elektrochemische Vorrichtung, der ein Vliesstoffbasismaterial und eine Anorganische-Partikel-Schicht aufweist, die anorganische Partikel enthält, wobei
das Vliesstoffbasismaterial überwiegend eine Synthetikharzfaser mit einem durchschnittlichen Faserdurchmesser von 1 bis 20 µm umfasst,
die Anorganische-Partikel-Schicht eine Anorganische-Partikel-Schicht A, die Magnesiumhydroxid mit einer durchschnittlichen Partikelgröße von 2,0 bis 4,0 µm enthält, und eine Anorganische-Partikel-Schicht B umfasst, die Magnesiumhydroxid mit einer durchschnittlichen Partikelgröße von nicht weniger als 0,5 µm und weniger als 2,0 µm enthält, und
die Anorganische-Partikel-Schicht A und die Anorganische-Partikel-Schicht B in dieser Reihenfolge auf einer Oberfläche des Vliesstoffbasismaterials gestapelt sind.

2. Ein Separator für eine elektrochemische Vorrichtung, der ein Vliesstoffbasismaterial und eine Anorganische-Partikel-Schicht aufweist, die anorganische Partikel enthält, wobei
das Vliesstoffbasismaterial überwiegend eine Synthetikharzfaser mit einem durchschnittlichen Faserdurchmesser von 1 bis 20 µm umfasst,
die Anorganische-Partikel-Schicht eine Anorganische-Partikel-Schicht A, die Magnesiumhydroxid mit einer durchschnittlichen Partikelgröße von 2,0 bis 4,0 µm enthält, und eine Anorganische-Partikel-Schicht B umfasst, die Magnesiumhydroxid mit einer durchschnittlichen Partikelgröße von nicht weniger als 0,5 µm und weniger als 2,0 µm enthält und
die Anorganische-Partikel-Schicht A auf einer Oberfläche des Vliesstoffbasismaterials angeordnet ist und die Anorganische-Partikel-Schicht B auf der anderen Oberfläche des Vliesstoffbasismaterials angeordnet ist.

3. Eine elektrochemische Vorrichtung, die den Separator für eine elektrochemische Vorrichtung gemäß Anspruch 1 oder 2 aufweist.

## Revendications

1. Séparateur pour un dispositif électrochimique, comprenant un matériau de base en tissu non tissé et une couche de particules inorganiques qui contient des particules inorganiques, dans lequel
le matériau de base en tissu non tissé comporte de manière prédominante une fibre de résine synthétique ayant un diamètre de fibre moyen de 1 à 20 µm,
la couche de particules inorganiques comporte une couche de particules inorganiques A qui contient de l'hydroxyde de magnésium avec une grosseur de particules moyenne de 2,0 à 4,0 µm, et une couche de particules inorganiques B qui contient de l'hydroxyde de magnésium avec une grosseur de particules moyenne non inférieure à 0,5 µm et inférieure à 2,0 µm, et
la couche de particules inorganiques A et la couche de particules inorganiques B sont empilées dans cet ordre sur une surface du matériau de base en tissu non tissé.

2. Séparateur pour un dispositif électrochimique, comprenant un matériau de base en tissu non tissé et une couche de particules inorganiques qui contient des particules inorganiques, dans lequel
le matériau de base en tissu non tissé comporte de manière prédominante une fibre de résine synthétique ayant un diamètre de fibre moyen de 1 à 20 µm,
la couche de particules inorganiques comporte une couche de particules inorganiques A qui contient de l'hydroxyde de magnésium avec une grosseur de particules moyenne de 2,0 à 4,0 µm, et une couche de particules inorganiques B qui contient de l'hydroxyde de magnésium avec une grosseur de particules moyenne non inférieure à 0,5 µm et inférieure à 2,0 µm, et
la couche de particules inorganiques A est disposée sur une surface du matériau de base en tissu non tissé, et la couche de particules inorganiques B est disposée sur l'autre surface du matériau de base en tissu non tissé.

3. Dispositif électrochimique comprenant le séparateur pour un dispositif électrochimique selon la revendication 1 ou 2.
